# EUROPÄISCHE PATENTSCHRIFT

(11) **EP 3 698 982 B1**
(45) Veröffentlichungstag und Bekanntmachung des Hinweises auf die Patenterteilung: **24.05.2023**
(21) Anmeldenummer: 20152178.8
(22) Anmeldetag: 16.01.2020
(51) Int. Cl.: B60B 7/00, B60B 7/04, B60B 7/20

(54) **DREHBARES ZIERELEMENT**
ROTATABLE DECORATIVE ELEMENT
ÉLÉMENT DÉCORATIF ROTATIF

(30) Priorität: 25.02.2019 DE 102019202507
(43) Veröffentlichungstag der Anmeldung: 26.08.2020
(73) Patentinhaber: VOLKSWAGEN AG, 38440 Wolfsburg (DE)
(72) Erfinder: Marschollek, Kamil, 38302 Wolfenbüttel (DE)

(56) Entgegenhaltungen:
- EP-A1- 2 380 748
- EP-A1- 3 132 946
- EP-A1- 3 628 508
- DE-U1- 8 807 263
- US-A1- 2018 022 149

## Beschreibung

Die Erfindung betrifft ein drehbares Zierelement gemäß dem Oberbegriff des Patentanspruchs 1 sowie eine Fahrzeug gemäß dem Oberbegriff des Patentanspruchs 7.

Drehbare Zierelemente sind dem Fachmann auf dem Gebiet von Fahrzeugen, beispielsweise Kraftfahrzeugen, bekannt. Derartige Zierelemente kommen im Bereich von Rädern von Fahrzeugen zum Einsatz und können beispielsweise ein Emblem, wie ein Herstellerlogo tragen. Ziel ist es dabei, das Zierelement auch bei sich drehendem Rad noch gut erkennbar zu orientieren, beziehungsweise die Drehung des Rades zu kompensieren.

Aus dem Stand der Technik sind im Zusammenhang damit unterschiedliche technische Lösungen bekannt.

So zeigt das US-amerikanische Patentdokument US 5659989 A beispielsweise eine Radabdeckung mit einer drehbaren Scheibe, die ein exzentrisches Gewicht umfasst.

Weiterhin geht aus der europäischen Patentanmeldung EP 2 607 096 A1 eine ähnliche Radnabenabdeckung hervor, bei der Schmutzpartikel fliehkraftgetrieben aus der Radnabenabdeckung ausgetragen werden können.

EP 3 628 508 A1 offenbart eine Nabenabdeckung für ein Rad eines Fahrzeuges, mit einer am Rad zu befestigenden Halteeinrichtung, an der um eine Drehachse drehbar ein Trägerelement zur Aufnahme eines Zierkörpers gelagert ist. Zwischen Trägerelement und Halteeinrichtung verläuft in Radialrichtung ein nach außen offener Spalt, der sich in Radialrichtung kontinuierlich nach außen erweitert.

EP 3 132 946 A1 offenbart ein drehbares Zierelement für ein Fahrzeug mit einem Gehäuse, einer Welle, die an dem Gehäuse relativ zu diesem drehbar gelagert ist und einen Zierabschnitt, der fliegend an der Welle gelagert ist. Der Zierabschnitt umfasst ein exzentrisches Gewicht. Zwischen Gehäuse und Zierabschnitt ist eine Kavität gebildet, die durch eine Materialhinterschneidung von einer Außenwelt getrennt ist. Die Materialhinterschneidung ist als Stufe ausgebildet und verläuft parallel zu einer Längsachse des drehbaren Zierelementes.

Der Erfindung liegt nun die Aufgabe zugrunde, eine verbesserte technische Lösung für ein drehbares Zierelement zu schaffen, die einen besseren Schutz vor Schmutz und Feuchtigkeit bietet und zugleich einfach aufgebaut ist.

Die Aufgabe wird durch die Gegenstände der unabhängigen Patentansprüche 1 und 7 gelöst. Weitere bevorzugte Ausgestaltungen der Erfindung ergeben sich aus den übrigen, in den Unteransprüchen genannten Merkmalen.

Gemäß der Erfindung besteht ein übergeordneter Gedanke darin, die Bereiche des technischen Systems, in die Schmutz oder Wasser eindringen können oder in denen sich Schmutz und Wasser ansammeln können, zu reduzieren.

Vor dem Hintergrund des eingangs erörterten übergeordneten Erfindungsgedankens betrifft ein Aspekt der Erfindung ein drehbares Zierelement für ein Fahrzeug, umfassend:
- ein Gehäuse;
- eine Welle, die an dem Gehäuse relativ zu diesem drehbar gelagert ist;
- einen Zierabschnitt, der das Zierelement aufweist und der fliegend an der Welle gelagert ist und sich dabei stirnseitig entlang des Gehäuses erstreckt; sowie
- ein exzentrisches Gewicht, das von dem Zierabschnitt umfasst ist.

Gemäß der Erfindung ist vorgesehen, dass das Gehäuse und der Zierabschnitt derart aufeinander ausgelegt sind, dass eine zwischen diesen gebildete Kavität in radialer Richtung der Welle, durch wenigstens eine Materialhinterschneidung von der Außenwelt getrennt ist und die Materialhinterschneidung ein Gefälle aufweist, so dass Wasser durch die Kavität in Richtung der Außenwelt transportierbar ist.

Weiterhin ist vorgesehen, dass, ausgehend von der Welle in Richtung einer Grenze der Kavität zur Außenwelt, entlang der Kavität wenigstens eine weitere Materialhinterschneidung vorgesehen ist, die ein Gefälle aufweist, so dass Wasser durch die Kavität in Richtung der Außenwelt transportierbar ist.

Mit anderen Worten ist, ausgehend von der Welle, somit keine geradlinige Verbindung durch die Kavität in die Außenwelt gegeben, da zumindest einmal das Gehäuse den Zierabschnitt hinterschneidet oder umgekehrt.

Somit können Wasser oder Schmutz von der Außenwelt her nicht in die Kavität eindringen und in den Bereich der Lagerung gelangen. Zugleich kann in der Kavität befindliches Wasser, beispielsweise Kondenswasser, über das Gefälle sicher in die Außenwelt gelangen. Wenn sich das Gehäuse des drehbaren Zierelements mit dem Rad dreht, wird der Abtransport von Wasser durch Fliehkräfte unterstützt.

In bevorzugter Ausgestaltung des drehbaren Zierelements der Erfindung ist vorgesehen, dass eine solche Materialhinterschneidung an einer Grenze der Kavität zur Außenwelt vorgesehen ist.

An der Grenze zur Außenwelt ist die vorteilhafte Wirkung der Materialhinterschneidung besonders groß, da so der gesamte weiter innen liegende Bereich der Kavität geschützt wird.

In weiter bevorzugter Ausgestaltung des drehbaren Zierelements der Erfindung ist vorgesehen, dass die Materialhinterschneidung an der Grenze zur Außenwelt derart gestaltet ist, dass das Wasser, wenn dieses aus der Kavität in die Außenwelt transportiert wird, einen S-artigen Verlauf nimmt.

Mit anderen Worten muss das Wasser aufgrund der Materialhinterschneidung seine Flussrichtung zumindest zweimal ändern, um aus der Kavität über die Grenze radial in die Außenwelt austreten zu können. Reinexemplarisch kann das Wasser zunächst radial in der Kavität fließen, kann die Flussrichtung sich dann in Richtung einer Längsrichtung der Welle verlagern und kann dann wieder radial bezogen auf die Welle fließen beziehungsweise aus der Kavität austreten.

Auf diese Weise ist die Materialhinterschneidung besonders einfach und effektiv realisierbar.

Je mehr solcher Materialhinterschneidungen vorgesehen sind, umso besser kann das Wasser radial auch über größere Distanzen abtransportiert werden, wobei der Bauraum des drehbaren Zierelements in Längsrichtung der Welle gering gehalten werden kann.

Gemäß der Erfindung ist vorgesehen, dass zumindest der Zierabschnitt und das exzentrische Gewicht ein Verbundbauteil bilden.

Dadurch, dass das exzentrische Gewicht nicht wie bei konventionellen Lösungen lediglich in den Zierabschnitt eingesetzt wird, sondern mit diesem integral gefertigt wird, werden Montagespalte vorteilhaft vermieden. Zugleich wird die systematische Komplexität reduziert.

In bevorzugter Ausgestaltung des drehbaren Zierelements der Erfindung ist vorgesehen, dass das Verbundbauteil den Zierabschnitt, die Welle und das exzentrische Gewicht umfasst.

Somit werden zusätzliche Montagespalte vermieden. Ferner wird, neben einer weiteren Vereinfachung der Konstruktion erreicht, dass mehrere relativ zu dem Gehäuse rotierenden Elemente integriert sind. Somit lässt sich das System dynamisch besser auslegen.

Es ist auch vom Gedanken der Erfindung umfasst, beispielsweise einen Innenring einer Lagerung der Welle in das Verbundbauteil zu integrieren, um so den Grad der Integration zu maximieren.

In weiter bevorzugter Ausgestaltung eines der drehbaren Zierelemente der Erfindung ist vorgesehen, dass der Zierabschnitt ein Spritzgussteil umfasst, das durch Spritzgießen mit zumindest einem der folgenden Elemente verbunden ist: mit dem exzentrischen Gewicht; mit der Welle; abschnittsweise mit einer Lagerung der Welle; mit dem Zierelement.

Die Herstellung des Zierabschnitts in dem Spritzgießverfahren ist besonders vorteilhaft mit Hinblick auf Aufwand und Flexibilität sowie die Vermeidung von Montagespalten. Vorzugsweise werden die Elemente derart eingespritzt, dass sie nicht mehr zerstörungsfrei lösbar sind, um die Verbindung so dicht wie möglich zu gestalten.

Vorzugsweise handelt es sich bei dem Spritzgussteil um ein Kunststoffteil. Das Zierelement kann vorteilhaft direkt mit dem Spritzgussteil hinterspritzt werden. Das Zierelement kann beispielsweise Aluminium umfassen. Für die Welle, die Lagerung und das exzentrisches Gewicht wird Edelstahl als Werkstoff bevorzugt. Für das Gehäuse wird Kunststoff als Werkstoff bevorzugt.

Da die drehbaren Zierelemente der Erfindung über einen besonders guten Schutz vor Schmutz und Feuchtigkeit verfügen, bieten sie sich insbesondere zur Realisierung von eingebetteten elektrischen Funktionen an. Beispielsweise können so auch zusätzlich beleuchtete Zierelemente realisiert werden. Beispielsweise können Magnete und Spulen vorgesehen werden, um die relative Bewegung zwischen Gehäuse und Zierabschnitt für elektrische Induktion nutzen. Beispielsweise können LEDs oder auch Elektrolumineszensfolien verwendet werden, um das Zierelement zum Leuchten zu bringen oder zu beleuchten.

Ein weiterer Aspekt der Erfindung betrifft ein Fahrzeug, vorzugsweise ein Kraftfahrzeug, umfassend ein erfindungsgemäßes drehbares Zierelement gemäß der vorhergehenden Beschreibung.

Vorzugsweise ist das drehbare Zierelement an einem Rad des Fahrzeugs, vorzugsweise einer Felge, vorgesehen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figuren 1a/1b: ein erfindungsgemäßes drehbares Zierelement in verschiedenen Ansichten; und
- Figur 2: ein erfindungsgemäßes Fahrzeug.

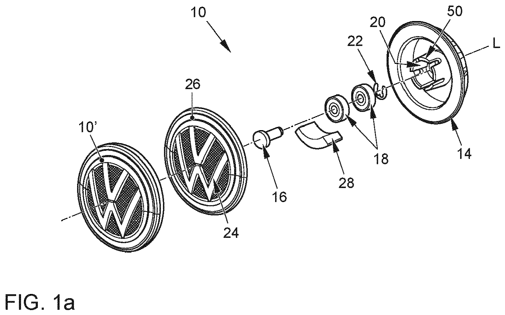

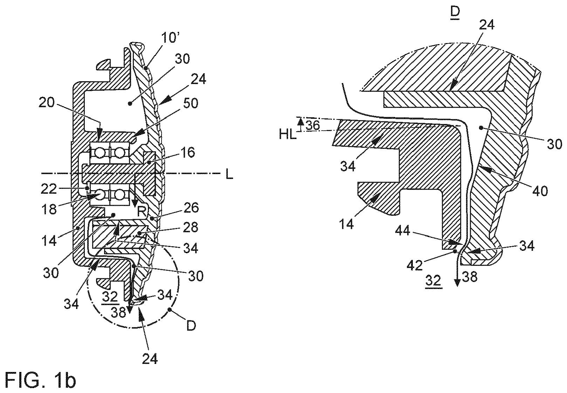

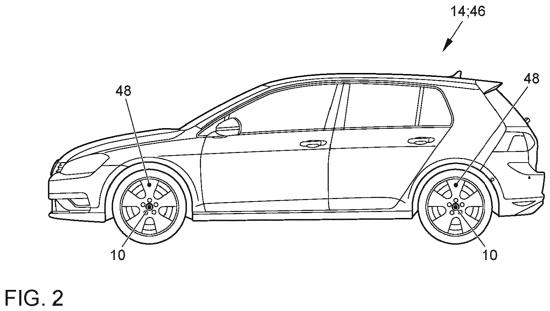

Die Figuren 1a und 1b zeigen ein drehbares Zierelement 10 gemäß der Erfindung, für ein Fahrzeug 12 (vergleiche Figur 2). Figur 1b umfasst eine zusätzliche Detailansichten D.

Figur 1a zeigt in einer Explosionsansicht Komponenten, die von dem drehbaren Zierelement 10 umfasst sind. Figur 1a ist dabei schematisch gehalten, wohingegen die genauere Gestaltung der Komponenten aus der Schnittansicht in Figur 1b zu entnehmen ist.

Zunächst ist in Figur 1a ersichtlich, dass das drehbare Zierelement 10 ein Gehäuse 14, eine Welle 16 und eine Lagerung 18 umfasst. Das Gehäuse 14 ist aus Kunststoff hergestellt, beispielsweise spritzgegossen. Bei der Welle 16 und der Lagerung 18 handelt es sich um Komponenten aus Edelstahl. Das Gehäuse 14 umfasst einen Aufnahmeraum 20 für die Lagerung 18. Die Welle 16 ist entlang ihrer Längsachse L mit der Lagerung 18 koppelbar und in dem Aufnahmeraum 20 lagerbar. Sie ist dann an dem Gehäuse 14 relativ zu diesem um die Längsachse L drehbar gelagert. Gezeigt ist ferner ein Sicherungsring 22, mit dem die Welle 16 in der Lagerung 18 sicherbar ist. Im montierten Zustand entspricht die Längsachse L somit der Längsachse L aller dieser Komponenten.

Weiterhin zeigt Figur 1a, dass das drehbare Zierelement 10 einen Zierabschnitt 24 umfasst. Der Zierabschnitt 24 umfasst ein Spritzgussteil 26. Auch wenn in Figur 1a zur Veranschaulichung eine Explosionsdarstellung gewählt ist, ist das Spritzgussteil 26 durch Spritzgießen mit der Welle 16 verbunden und somit fliegend an der Welle 16 gelagert (dazu später in Bezug auf Figur 1b). Die Welle 16 ist dafür mit dem Spritzgussteil 26 umspritzt. Ferner ist an dem Zierabschnitt 24 ein Zierelement 10` vorgesehen. Dieses ist ebenfalls mit dem Spritzgussteil 26 verbunden, indem es mit dem Spritzgussteil 26 hinterspritzt ist. Das Zierabschnitt 24 umfasst weiterhin ein exzentrisches Gewicht 28, das von dem Spritzgussteil 26 umspritzt ist. Somit bilden der Zierabschnitt 24, die Welle 16, das exzentrische Gewicht 28 und das Zierelement 10` ein Verbundbauteil.

Zur weiteren Erläuterung wird auf Figur 1b eingegangen, die eine Schnittansicht durch das drehbare Zierelement 10 aus Figur 1a darstellt, wenn dieses zusammengebaut ist. Die Schnittebene verläuft dabei senkrecht durch die Längsachse L, wobei die Längsachse L vollständig in der Schnittebene liegt.

Aus Figur 1b ist ersichtlich, dass der Zierabschnitt 24 sich stirnseitig entlang des Gehäuses 14 erstreckt und dabei über die Lagerung 18 relativ zu diesem um die Längsachse L drehbar ist. Das exzentrische Gewicht 28 bewirkt aufgrund der Schwerkraft, dass der Zierabschnitt 24 stillsteht, wenn das Gehäuse 14 gedreht wird.

Die Lagerung 18 ist in den Aufnahmeraum 20 eingesetzt und über eine Rastverbindung gesichert. Die Rastverbindung wird über eine Haltevorrichtung 50 realisiert, die in das Gehäuse 14 eingespritzt ist. Die Lagerung 18 ist in einer offenen, halbgekapselten Bauweise in dem Gehäuse 14 eingefasst. Dies ist nur auf Grund des durch die Erfindung erreichten Schutzes vor Schmutz und Wasser möglich, worauf im Folgenden noch näher eingegangen wird.

Das Gehäuse 14 und der Zierabschnitt 24 bilden auf Grund ihrer relativen Anordnung eine Kavität 30 aus. Die Kavität 30 erstreckt sich von der Lagerung 18 zwischen dem Gehäuse 14 und dem Zierabschnitt 24 bis hin zur Außenwelt 32.

Dabei sind das Gehäuse 14 und der Zierabschnitt 24 derart aufeinander ausgelegt, dass die Kavität 30, in radialer Richtung R der Welle 14, durch eine Mehrzahl von Materialhinterschneidungen 34 von der Außenwelt 32 getrennt ist. Mit anderen Worten erstreckt sich Kavität 30 von der Lagerung 18 in radialer Richtung R nicht durchgehend linear bis zur Außenwelt 32, sondern verläuft um die Materialhinterschneidungen 34 labyrinthartig herum. Die Materialhinterschneidungen 34 weisen dabei jeweils ein Gefälle 36 auf, was im Folgenden in Bezug auf Detailansicht D noch erläutert wird. Über das Gefälle 36 kann Wasser, beispielsweise Kondenswasser 38, das sich aus klimatischen Gründen in der Kavität 30 bilden kann, wie dargestellt durch die Kavität 30 in Richtung der Außenwelt 32 transportiert werden.

In Detailansicht D ist ein Detailbereich gezeigt, gemäß der Kennzeichnung D in Figur 1b.

Dort ist anhand einer Hilfslängsachse HL, die nur der Illustration dient, ein Gefälle 36 an einer Materialhinterschneidung 34 gezeigt. Materialhinterschneidung 34 wird von dem Gehäuse 14 in Bezug auf den Zierabschnitt 24 gebildet. Die Hilfslängsachse HL ist parallel zur Längsachse L orientiert. Das Gefälle 36 kann beispielsweise 3° gegenüber der Längsachse L geneigt sein. Um den Abtransport von beispielsweise Kondenswasser 38 zu unterstützen, können weitere Schrägen 40 vorgesehen sein.

Auch wenn vorliegend die Materialhinterschneidungen 34 mit gleichen Bezugszeichen versehen sind, so können sie im Detail doch nach Ermessen des Fachmannes ausgestaltet werden, der sich dabei nach dem hierin offenbarten Sinn und Zweck der Materialhinterschneidung 34 richtet.

So zeigt Detailansicht D, dass eine solche Materialhinterschneidung 34 an einer Grenze 42 der Kavität 30 zur Außenwelt 32 vorgesehen ist. Die Materialhinterschneidung 34 an der Grenze 42 zur Außenwelt 32 ist derart gestaltet, dass Wasser wie Kondenswasser 38, wenn dieses aus der Kavität 30 in die Außenwelt 32 transportiert wird, einen S-artigen Verlauf 44 nimmt. Ein Austritt rein in radialer Richtung R ist nicht möglich. Im Umkehrschluss kann somit aus der Außenwelt 32 in radialer Richtung R auch kein Schmutz oder Wasser, beispielsweise Spritzwasser, in die Kavität 30 eintreten.

Figur 2 zeigt ein erfindungsgemäßes Fahrzeug 12, dass ein erfindungsgemäßes drehbares Zierelement 10, beispielsweise wie in Figur 1a und 1b gezeigt, umfasst.

Bei dem Fahrzeug 12 handelt es sich um ein Kraftfahrzeug 46. Das Kraftfahrzeug 46 umfasst Räder mit Felgen 48, die mit dem drehbaren Zierelement 10 versehen sind.

### Bezugszeichenliste

- 10: drehbares Zierelement
- 10': Zierelement
- 12: Fahrzeug
- 14: Gehäuse
- 16: Welle
- 18: Lagerung
- 20: Aufnahmeraum
- 22: Sicherungsring
- 24: Zierabschnitt
- 26: Spritzgussteil
- 28: exzentrisches Gewicht
- 30: Kavität
- 32: Außenwelt
- 34: Materialhinterschneidung
- 36: Gefälle
- 38: Kondenswasser
- 40: Schräge
- 42: Grenze
- 44: S-artiger Verlauf
- 46: Kraftfahrzeug
- 48: Felge
- 50: Haltevorrichtung
- HL: Hilfslängsachse
- L: Längsachse
- R: radiale Richtung

## Patentansprüche

1. Drehbares Zierelement (10) für ein Fahrzeug (12), umfassend:
- ein Gehäuse (14);
- eine Welle (16), die an dem Gehäuse relativ zu diesem drehbar gelagert ist;
- einen Zierabschnitt (24), der ein Zierelement (10`) aufweist und der fliegend an der Welle gelagert ist und sich dabei stirnseitig entlang des Gehäuses erstreckt;
- ein exzentrisches Gewicht (28), das von dem Zierabschnitt umfasst ist,
**dadurch gekennzeichnet, dass**
das Gehäuse und der Zierabschnitt derart aufeinander ausgelegt sind, dass eine zwischen diesen gebildete Kavität (30), in radialer Richtung (R) der Welle, durch wenigstens eine Materialhinterschneidung (34) von der Außenwelt (32) getrennt ist und die Materialhinterschneidung ein Gefälle (36) aufweist, so dass Wasser (38) durch die Kavität in Richtung der Außenwelt transportierbar ist, und ausgehend von der Welle in Richtung einer Grenze (42) der Kavität zur Außenwelt, entlang der Kavität wenigstens eine weitere Materialhinterschneidung (34) vorgesehen ist, die ein Gefälle (36) aufweist, so dass Wasser (38) durch die Kavität in Richtung der Außenwelt transportierbar ist.

2. Drehbares Zierelement nach Anspruch 1, **dadurch gekennzeichnet, dass** eine solche Materialhinterschneidung (34) an einer Grenze (42) der Kavität zur Außenwelt vorgesehen ist.

3. Drehbares Zierelement nach Anspruch 2, **dadurch gekennzeichnet, dass** die Materialhinterschneidung (34) an der Grenze zur Außenwelt derart gestaltet ist, dass das Wasser, wenn dieses in der Kavität in die Außenwelt transportiert wird, einen S-artigen Verlauf (44) nimmt.

4. Drehbares Zierelement nach Anspruch 3,
**dadurch gekennzeichnet, dass** zumindest der Zierabschnitt und das exzentrische Gewicht ein Verbundbauteil bilden.

5. Drehbares Zierelement nach Anspruch 4, **dadurch gekennzeichnet, dass** das Verbundbauteil den Zierabschnitt (24), die Welle (16) und das exzentrische Gewicht (28) umfasst.

6. Drehbares Zierelement nach einem der Ansprüche 1 bis 5, **dadurch gekennzeichnet, dass** der Zierabschnitt ein Spritzgussteil (26) umfasst, das durch Spritzgießen mit zumindest einem der folgenden Elemente verbunden ist: mit dem exzentrischen Gewicht (28); mit der Welle (16); abschnittsweise mit einer Lagerung (18) der Welle (16); mit dem Zierelement (10').

7. Fahrzeug (12), umfassend ein drehbares Zierelement (10) nach einem der vorhergehenden Ansprüche.

## Claims

1. Rotatable decorative element (10) for a vehicle (12), comprising:
- a housing (14);
- a shaft (16) which is mounted on the housing so as to be rotatable relative thereto;
- a decorative portion (24) which has a decorative element (10'), is mounted in a floating manner on the shaft and extends along the front of the housing;
- an eccentric weight (28) comprised by the decorative portion,
**characterized in that**
the housing and the decorative portion are designed such that a cavity (30) formed between them is separated from the external environment (32) in the radial direction (R) of the shaft by at least one material undercut (34), and the material undercut has a gradient (36), such that water (38) can be transported through the cavity in the direction of the external environment, and, starting from the shaft, in the direction of a boundary (42) of the cavity to the external environment, at least one further material undercut (34) is provided along the cavity, said undercut having a gradient (36), such that water (38) can be transported through the cavity in the direction of the external environment.

2. Rotatable decorative element according to claim 1, **characterized in that** such a material undercut (34) is provided at a boundary (42) of the cavity to the external environment.

3. Rotatable decorative element according to claim 2, **characterized in that** the material undercut (34) at the boundary to the external environment is designed such that the water, when it is transported in the cavity into the external environment, takes an S-shaped course (44).

4. Rotatable decorative element according to claim 3,
**characterized in that** at least the decorative portion and the eccentric weight form a composite component.

5. Rotatable decorative element according to claim 4, **characterized in that** the composite component comprises the decorative portion (24), the shaft (16) and the eccentric weight (28).

6. Rotatable decorative element according to any of claims 1 to 5,
**characterized in that** the decorative portion comprises an injection molded part (26) connected by injection molding to at least one of the following elements: the eccentric weight (28); the shaft (16); a bearing (18) of the shaft (16), in portions; the decorative element (10').

7. Vehicle (12) comprising a rotatable decorative element (10) according to any of the preceding claims.

## Revendications

1. Élément décoratif (10) rotatif pour un véhicule (12), comprenant :
- un boîtier (14) ;
- un arbre (16) qui est monté sur le boîtier de manière à pouvoir pivoter par rapport à celui-ci ;
- une section décorative (24) qui présente un élément décoratif (10'), est montée en porte-à-faux sur l'arbre et s'étend ainsi côté frontal le long du boîtier ;
- un poids excentrique (28) qui est entouré par la section décorative,
**caractérisé en ce que**
le boîtier et la section décorative sont disposés l'un sur l'autre de telle sorte qu'une cavité (30) formée entre eux, dans la direction radiale (R) de l'arbre, est séparée du monde extérieur (32) par au moins une contre-dépouille de matériau (34) et la contre-dépouille de matériau présente une pente (36), de sorte que de l'eau (38) peut être transportée à travers la cavité en direction du monde extérieur et, à partir de l'arbre en direction d'un bord (42) de la cavité vers le monde extérieur, au moins une autre contre-dépouille de matériau (34) est prévue le long de la cavité et présente une pente (36), de sorte que de l'eau (38) peut être transportée à travers la cavité en direction du monde extérieur.

2. Élément décoratif rotatif selon la revendication 1,
**caractérisé en ce qu'**une telle contre-dépouille de matériau (34) est prévue au niveau d'un bord (42) de la cavité vers le monde extérieur.

3. Élément décoratif rotatif selon la revendication 2, **caractérisé en ce que** la contre-dépouille de matériau (34) est conçue au niveau du bord vers le monde extérieur de telle sorte que l'eau, lorsqu'elle est transportée dans la cavité dans le monde extérieur, suit un tracé à la manière d'un S (44).

4. Élément décoratif rotatif selon la revendication 3,
**caractérisé en ce qu'**au moins la section décorative et le poids excentrique forment un composant composite.

5. Élément décoratif rotatif selon la revendication 4, **caractérisé en ce que**
le composant composite comprend la section décorative (24), l'arbre (16) et le poids excentrique (28).

6. Élément décoratif rotatif selon l'une des revendications 1 à 5,
**caractérisé en ce que** la section décorative comprend une pièce moulée par injection (26) qui est reliée par moulage par injection à au moins l'un des éléments suivants : au poids excentrique (28) ; à l'arbre (16) ; au moins dans certaines sections, à un palier (18) de l'arbre (16) ; à l'élément décoratif (10`).

7. Véhicule (12), comprenant un élément décoratif (10) rotatif selon l'une des revendications précédentes.
